# EUROPEAN PATENT APPLICATION

(11) **EP 1 158 029 A1**
(43) Date of publication of application: **28.11.2001**
(21) Application number: 01110807.3
(22) Date of filing: 04.05.2001
(51) Int. Cl.: C09D 11/00

(54) **Novel ink jet inks and method of printing**

(30) Priority: 22.05.2000 US 575632
(71) Applicant: ILLINOIS TOOL WORKS INC., Glenview, Cook County, Illinois 60025 (US)
(72) Inventor: Early, James A., New Milford, Connecticut 06776 (US)
(74) Representative: Vetter, Ewald Otto, Dipl.-Ing.

(57) **Abstract**

The invention disclosed herein is directed to novel ink jet ink formulations and methods of printing using the novel inks. The inks comprise both a carrier and a colorant in specified weight ratios The carrier is an aqueous solution comprising water, cosolvent, binder, and, optionally, a pH adjuster. The disclosed method of printing a substrate comprises the step of jetting the inks described herein onto a substrate. Preferred substrates for printing include paper, paper board, fabrics and textiles.

## Description

### FIELD OF THE INVENTION

The present invention relates to the field of ink jet technology, particularly to novel ink jet ink formulations and their use in printing applications.

### BACKGROUND OF THE INVENTION

Ink jet printing is a non-impact dot-matrix printing technology in which droplets of ink are jetted from a small aperture onto a substrate to create an image. Ink jet printing processes are especially suited for digital printing in which the image to be printed is encoded electronically. Two primary types of digital printing methods are currently used which are distinguished by the manner in which colors are rendered in the printed image. One method is process printing in which a fixed number of standard colors, usually four to eight, are used to achieve a full color range. Varying amounts of this color set are combined on the substrate surface using a dithering process to minimize the visibility of the differently colored dots. In contrast, the second digital printing method employs custom colors or "spot" colors. This method requires premixing of inks or colorants to create the desired shades which are then used to render the desired image.

Digital ink jet printing processes, such as those mentioned above, are currently being developed for applications in textile printing. The textile industry has need for decorating fabrics with full spectrum color quickly, with the greatest quality possible at the least expense, and with enough flexibility to meet customer demand. Digital printing promises to reduce the labor involved for current textile printing methods which employ a multi-step screening method having extensive film, screen, plate, and press preparation. Although printing onto textiles with the use of ink jet technology has many advantages related to speed and versatility, the method is not without many challenges. Ink jet inks must meet both the stringent requirements for jetting as well as for decorating fabrics.

Among the requirements for most ink jet inks of having low viscosity, desired surface tension, low toxicity, desired hue, and desired drying time, ink jet inks also require bonding and fastness to the selected substrate. For textile substrates in particular, the inks must adhere to fabric well enough to withstand general use. Inks must not fade, rub off, transfer to other substrates, or dissolve in dry cleaning solvents. In order to achieve the bonding of ink jetted ink onto fabrics, a fixative is generally applied to the fabric prior to printing. However, fabrics pre-treated with fixative are costly, thereby the development of ink jet technology for textile applications.

Currently, ink jet inks which incorporate fixatives or binders, are being developed. In this way, pre-treated fabrics are unnecessary for ink jet printing applications. An exarnple of an ink jet ink containing binder is provided by U.S. Pat. No. 5,936,027. The non-aqueous ink jet ink formulation disclosed therein reveals the use of silicone and phenolic resins to assist in the binding of pigments to the substrate, mainly textiles. However, solvent-based inks such as these are limited in their suitability for many applications, whereas, aqueous-based inks are more versatile, inherently less toxic, and generally more desired for large scale industrial printing applications.

In fact, many known ink jet inks incorporate polymers and resins for improved properties. Examples of water-based ink jet inks containing polymeric or resinous additives for enhanced properties are described herein. Japanese Pat. No. 62225577 discloses an aqueous ink jet ink containing polymers (polyesters or polyamides) and a crosslinking agent. U.S. Pat. No. 5,106,417 reveals aqueous ink jet ink pigment preparations having a high molecular weight acid polyacrylic resin component for dispersing pigment. Similarly, U.S. Pat. No. 5,624,485 describes aqueous ink jet ink formulations containing minor amounts of polymer for improved image quality on non water-receptive substrates. Furthermore, U.S. Pat. No. 6,005,023 discloses an aqueous inkjet ink containing a branched polymer dispersant and an emulsion polymer. However, aqueous ink jet inks containing these materials for the purpose of fixing colorants to substrates are yet to be perfected.

In as much as substrates, such as textiles, often require agents to promote the bonding and fastness of inks onto them, a simple and effective method of providing desired ink adherence is needed while avoiding the inefficient use of pre-treated substrate. Thus, the inks of the present invention, disclosed herein, provide a means toward this end, thereby facilitating the development of ink jet technology.

### SUMMARY OF THE INVENTION

The present invention encompasses ink jet inks comprising both a carrier and a colorant such that the carrier to colorant weight ratio is from about 1:1 to about 50:1. The carrier comprises: (i) from about 25 to about 90 percent by weight water; (ii) from about 1 to about 50 percent by weight cosolvent; (iii) from about 0 to about 10 percent by weight pH adjuster; and (iv) from about 1 to about 30 percent by weight binder. The binder is preferably an unbranched polymeric resin having a weight average molecular weight of from about 1000 to about 20,000. Suitable resins include acrylic resins, vinyl resins, and cellulosic resins. The colorant component of the inks includes both dyes, pigments, and pigment dispersions.

Further contemplated by the present invention is a method of printing a substrate comprising the step of jetting ink, as formulated above, onto a substrate. Preferred substrates include paper, paper board, fabrics, and textiles.

### DESCRIPTION OF PREFERRED EMBODIMENTS

The present invention is directed to ink jet inks that comprise a binder component for promoting the bonding of ink to a substrate. The inks of the present invention are particularly useful in ink jet printing applications where the substrate requires strong adherence of ink. In preferred embodiments, the inks include two main components, namely 1) an aqueous carrier that contains water, cosolvent, binder, and an optional pH adjuster, and 2) a colorant such as a dye or pigment, for example.

As used herein, numerical ranges preceded by the term "about" should not be considered to be limited to the recited range. Rather, numerical ranges preceded by the term "about" should be understood to include a range accepted by those skilled in the art for any given element in ink jet ink formulations according to the present invention.

Carrier formulations of the present invention are primarily aqueous, having from about 25 to about 90 percent by weight water. Preferred formulations include water in an amount from about 40 to about 90 percent by weight, while more preferred carriers have from about 55 to about 80 percent by weight water.

In addition to water, carriers of the present invention comprise cosolvents which may promote dissolution of ink components and reduce the solubility of gases in the final ink formulations. The term "cosolvent," as used herein, is meant to include both a single cosolvent or a mixture of cosolvents. Generally, cosolvents can be water miscible or water soluble materials present in the carrier in an amount of from about 1 to about 50 percent by weight, preferably from about 5 to about 40 percent by weight, or more preferably from about 10 to about 30 percent by weight. Cosolvents suitable for the present invention include one or more of the following compounds; glycols, glycol ethers, polyethylene glycol, glycerin, or ketones. Glycols may include ethylene glycol, diethylene glycol, triethylene glycol, propylene glycol, dipropylene glycol, and tripropylene glycol, for example. Preferred glycol ethers include, but are not limited to, ethylene glycol methyl ether, ethylene glycol ethyl ether, ethylene glycol propyl ether, ethylene glycol butyl ether, propylene glycol methyl ether, propylene glycol ethyl ether, propylene glycol propyl ether, and propylene glycol butyl ether. Polyethylene glycols (PEGs) of varying average molecular weights are also suitable as cosolvents. Preferred PEGs include, but are not limited to, PEG 100, PEG 200, PEG 300, PEG 400, PEG 600, and PEG 800. In addition, the ketones suitable as cosolvents include, for example, acetone or methyl ethyl ketone.

Both carrier and ink compositions may have pH values from about 3 to about 12; however, from about 7 to about 9 is more preferred. Additives such as pH adjusters may be included in the carrier for several reasons such as achieving a desired pH, or neutralizing, solubilizing, or hydrolyzing other ink and carrier components. For instance, components such as binder, which can be insoluble in neutral aqueous solution, may be hydrolyzed and made soluble by addition of acid or base to the carrier formulations. Any acid, base, or buffering system may be used as such, however, bases such as ammonium hydroxide, ammonia, trialkylamines, and alkali metal salts of hydroxide are preferred. As used herein, the term "pH adjuster" is meant to refer to a single pH adjuster or a combination of two or more pH adjusters. The presence of pH adjuster inthe carrier is optional, and, when present, may range in amounts from about 0 to about 10 percent by weight, more preferably from about 0 to about 5 percent by weight, or even more preferably from about 0 to about 3 percent by weight.

The carrier also contains at least one binder which promotes the bonding of ink to substrate. In preferred embodiments, binders are unbranched polymeric resins such as acrylic resins, vinyl resins, or cellulosic resins that are dissolved in the carrier and inks. Preferred binders have an weight average molecular weight range of from about 1000 to about 20,000; however, from about 1000 to about 15,000 is more preferred, and from about 1000 to about 10,000 is even more preferred. Binder is present in the carrier in amounts from about 1 to about 30 percent by weight, or more preferably from about 1 to about 10 percent by weight, or even more preferably from about 1 to about 5 percent by weight. Binders can be present in the carrier as both a single resin or a mixture of resins, and the term "binder," as used herein, is meant encompass either embodiment.

Binders of the present invention include acrylic resins derived from acrylic or methacrylic monomers including, but not limited to, acrylic acid, acrylic acid esters, methyl acrylate, ethyl acrylate, n-butyl acrylate, acrylonitrile, acrylamide, methacrylic acid, methacrylic acid esters, methyl methacrylate, ethyl methacrylate, n-butyl methacrylate, methacrylamide, methacrylonitrile, and derivatives thereof. Acrylic resin binders may also comprise other monomers such as vinyl monomers including, but not limited to, styrene, styrene derivatives, butadiene, N-vinylpyrrolidone, vinyl acetate, and derivatives thereof. Preferred acrylic resins include styrene acrylic resins such as the Joncryl® resins commercially available from SC Johnson Polymer.

In other embodiments of the present invention, the binder may be a vinyl resin such as, for example, polystyrene, polyvinylacetate, polyvinylpyrrolidone, polyvinlyalcohol, or polyvinylbutyrol. Vinyl resins of the present invention are comprised of one or more types of vinyl monomers including, but not limited to, styrene and styrene derivatives, vinyl acetate, vinyl alcohol, butadiene, and N-vinylpyrrolidone. Vinyl resins may also comprise other ethylenically unsaturated monomers.

Binders may also comprise any cellulosic resin such as, for example, a cellulose ester or cellulose ether. A preferred cellulosic resin is hydroxy methyl cellulose.

Colorants of the present invention include both dyes, pigments, and pigment dispersions. Dyes, according to the present invention, are preferably water soluble colorants. Preferred dyes belong to the family of reactive dyes encompassing, for example, CI Reactive Yellows 13, 30, 37, 84; CI Reactive Reds 22, 23, 120, 141, 180; CI Reactive Blues 4, 19, 21; and CI Reactive Blacks 5 and 31. Other dyes suitable for the present invention include Acid, Basic, Vat, and Direct dyes. In addition to dyes, pigments and pigment dispersions are also appropriate for the present invention. Pigments are water-insoluble colorants which are often used in conjunction with dispersants to form pigment dispersions. The dispersant aids in uniformly mixing pigment particles into a desired medium. Typical dispersants include many types of materials well known to those skilled in the art including many types of polymers. For example, commercially available pigment dispersions are known that contain polyethoxylated hydrocarbons and other dispersing materials characterized as nonionic or lacking carboxylic acid groups. Any pigment dispersion is suitable for the present invention, however, preferred pigment dispersions are available commercially, including, but not limited to Hostafine® (Clariant), HiFast® (BASF), and Imperon® (Dystar) pigment dispersions.

Suitable carrier to colorant ratios comprising the inks of the present invention range from about 1:1 to about 50:1, however a ratio of about 2:1 to about 25:1 is more preferred, and a ratio of about 3:1 to about 10:1 is most preferred.

Ink jet inks can be made by methods well known in the art; however, the following general procedure has been successful in producing inks of the present invention. Water and, optionally, pH adjuster are added together to a first mixing chamber. With stirring, the binder is added and mixed until completely dissolved. Cosolvent is then added with continued mixing. To a second mixing chamber, charged with the colorant, the contents of the first mixing chamber are slowly added with mixing. A finished ink is produced upon continual mixing of the components for a period of time thereafter dependent on the specific components.

In other embodiments of the present invention, the ink compositions may include other additives such as defoaming agents, biocides, humectants, anti-oxidants, electrolytes, surfactants, and the like for improved properties.

Ink formulations of the present invention preferably have properties amenable to ink jetting. For instance, a surface tension at standard temperature and pressure (STP) of from about 30 to about 50 dynes/cm is suitable, although a range of from about 32 to about 46 dynes/cm is more preferred, and a range from about 35 to about 42 dynes/cm is even more preferred. Jetting viscosity, which describes the viscosity of inks at jetting temperature and at atmospheric pressure, may range from about 4 to about 20 cp; however, the lower viscosities, ranging from about 4 to about 12 cp, are more preferred. Jetting temperatures in thermal jetting methods are generally elevated with respect to room temperature and may range from about 20 °C to about 70 °C. A typical thermal jetting temperature for inks of the present invention is about 35 °C.

Also encompassed by the present invention are methods of printing on substrates using the inks disclosed herein. Preferred methods of printing involve the step of jetting ink onto a substrate. Ink may be jetted with a continuous or drop-on-demand (DOD) ink jet printer either of which may utilize any method for droplet formation including thermal, piezoelectric, electrostatic, and acoustic methods, as are all well known in the art. A thorough treatment of ink jet technology, including methods of ink jet printing appropriate for the present invention, is provided in *Recent Progress in Ink Jet Technologies II,* E. Hanson, ed., Society for Imaging Science and Technology, Springfield, VA, 1999, incorporated herein by reference in its entirety.

Substrates, onto which the ink is jetted, encompass any medium requiring printing. Porous substrates, such as those that are absorbant, are particularly preferred. Substrates that are porous can be comprised of natural or synthetic fibers. Synthetic fibers include polyester, nylon, and lycra. Non-limiting examples of natural fiber substrates include paper, paper board, cellulosic fiber, cotton, linen, and silk. Substrate comprising cellulosic fibers, such as paper and paper board, suitable for the present invention may be coated or uncoated. Futhermore, suitable types of paper and paper board include, for example, kraft, bond, and fiber blends. Also suitable for the present invention are textiles and fabrics made from either or both natural or synthetic fibers. Fabrics and textiles may be characterized as knitted, woven, or unwoven. Prior to printing, fabrics and textiles may be pre-treated with a fixative or other agent, however, untreated fabrics and textiles, having not been exposed to fixatives or binding agents before printing, are preferred, as the binder incorporated in the ink formulations can promote the bonding of ink to the fabric or textile.

Preferred applications of the present printing methods include creating printed fabrics and textiles, color posters, and color billboards, or printing on outer carton packaging and primary unit packaging. In particular, the method of the present invention is especially suited for color printing, including both process printing (where colored inks are combined on the substrate) and use of a "color kitchen" (where colored inks are custom made before printing). The latter method of color printing is made practical by the ink formulations of the present invention because the custom mixing of colors prior to printing is made easier by the use of a universal carrier system, in which the colored inks of the present invention are all compatible since they can all be formulated with similar carrier systems.

Those skilled in the art will appreciate that numerous changes and modifications may be made to the preferred embodiments of the present invention, and that such changes and modifications may be made without departing from the spirit of the invention. It is, therefore, intended that the appended claims cover all such equivalent variations as fall within the true spirit and scope of the present invention.

### EXAMPLES

### Example 1: Method for making ink.

To a first mixing chamber are added 70 g of water and 1.5 g of ammonium hydroxide. Joncryl 693 resin in an amount of 5 g is added to the chamber with mixing. When the Joncryl resin is completely dissolved, 23.5 g of propylene glycol methyl ether is added and mixed for about 30 minutes. Thereafter, 5.0 g of propylene glycol n-propyl ether is added and mixed for another 30 minutes. To a second mixing chamber is added 18.5 g of Hostafine Blue B2G pigment dispersion. While mixing, the contents of the first mixing chamber are slowly added to the contents of the second mixing chamber. The final mixture is continuously stirred for one hour, thereafter yielding the final ink product.

### Example 2: Carrier formulations indicated as weight percentages of components.

**Table 1**

| | Carrier No. | | | | | |
|---|---|---|---|---|---|---|
| | 1 | 2 | 3 | 4 | 5 | 6 |
| water | 65.0 | 67.8 | 70.0 | 75.3 | 65.0 | 70.0 |
| ammonium hydroxide | 3.0 | 2.3 | 1.5 | 0.8 | 3.0 | 1.5 |
| propylene glycol methyl ether | 20.0 | 22.5 | 23.5 | 24.0 | 20.0 | 23.5 |
| propylene glycol n-propyl ether | --- | --- | --- | --- | --- | --- |
| Joncryl 693 | 10.0 | 7.5 | 5.0 | 2.5 | --- | --- |
| Joncryl HPD 671 | --- | --- | --- | --- | 10.0 | 5.0 |

### Example 3: Carrier formulations indicated as weight percentages of components.

**Table 2**

| | Carrier No. | | | | | |
|---|---|---|---|---|---|---|
| | 7 | 8 | 9 | 10 | 11 | 12 |
| water | 70.0 | 70.0 | 70.0 | 70.0 | 70.0 | 70.0 |
| ammonium hydroxide | --- | 1.5 | 1.5 | 1.5 | 1.5 | 1.5 |
| propylene glycol methyl ether | 24.0 | 23.5 | 23.5 | 23.5 | 23.5 | 12.0 |
| propylene glycol n-propyl ether | --- | 10.0 | 5.0 | 10.0 | 5.0 | 2.5 |
| Joncryl 693 | --- | 5.0 | 5.0 | --- | --- | 5.0 |
| Joncryl HPD 671 | --- | --- | --- | 5.0 | 5.0 | --- |
| polyvinylpyrrolidone K-15 | 5.0 | --- | --- | --- | --- | --- |

### Example 4: Ink formulations comprising carriers 1-7.

Jettable ink formulations are prepared by combining one of carriers 1, 2, 3, 4, 5, 6, or 7 with a pigment dispersion such that there is a carrier to pigment dispersion weight ratio of 85:15.

### Example 5: Ink formulations comprising carriers 9, 10, and 12.

An optimal color ink jet ink set is presented in table 3 indicating carrier to colorant weight ratios of the components specified.

**Table 3**

| | Carrier 9 | Carfier 10 | Carrier 12 |
|---|---|---|---|
| Hostafine Blue B2G | 85:15 | --- | --- |
| HiFast N CO Fuschia | --- | --- | 85:15 |
| Hostafine Yellow GR | 85:15 | --- | --- |
| Hostafine Black T | --- | 85:15 | --- |

### Example 6: Ink formulations particularly suited for printing on textiles.

Tables 4-9 contain carrier formulations which, upon combination with any pigment dispersion in a carrier:dispersion ratio of 85:15, yield inks of the present invention.

**Table 4**

| | Carrier No. | | | | | |
|---|---|---|---|---|---|---|
| | 13 | 14 | 15 | 16 | 17 | 18 |
| water | 70.0 | 70.0 | 70.0 | 70.0 | 70.0 | 70.0 |
| ammonium hydroxide | 3.0 | 3.0 | 3.0 | 3.0 | --- | --- |
| glycerin | 15.0 | 15.0 | 15.0 | 15.0 | 15.0 | 15.0 |
| Joncryl HPD 671 | 10.0 | --- | --- | --- | --- | --- |
| Joncryl 682 | --- | 10.0 | --- | --- | --- | --- |
| Joncryl 690 | --- | --- | 10.0 | --- | --- | --- |
| Joncryl 693 | --- | --- | --- | 10.0 | --- | --- |
| polyvinylalcohol | --- | --- | --- | --- | 10.0 | --- |
| polyvinylbutyrol | --- | --- | --- | --- | --- | 10.0 |

**Table 5**

| | Carrier No. | | | | | |
|---|---|---|---|---|---|---|
| | 19 | 20 | 21 | 22 | 23 | 24 |
| water | 70.0 | 70.0 | 70.0 | 70.0 | 70.0 | 70.0 |
| ammonium hydroxide | --- | 3.0 | 3.0 | 3.0 | 3.0 | 3.0 |
| glycerin | 15.0 | --- | --- | --- | --- | --- |
| PEG 100 | --- | 15.0 | --- | --- | --- | --- |
| PEG 200 | --- | --- | 15.0 | --- | --- | --- |
| PEG 400 | --- | --- | --- | 15.0 | --- | --- |
| PEG 600 | --- | --- | --- | --- | 15.0 | --- |
| PEG 800 | --- | --- | --- | -- | --- | 15.0 |
| Joncryl 693 | --- | 10.0 | 10.0 | 10.0 | 10.0 | 10.0 |
| hydroxy methyl cellulose | 10.0 | --- | --- | --- | --- | --- |

**Table 6**

| | Carrier No. | | | | | | | |
|---|---|---|---|---|---|---|---|---|
| | 25 | 26 | 27 | 28 | 29 | 30 | 31 | 32 |
| water | 70.0 | 70.0 | 70.0 | 70.0 | 70.0 | 70.0 | 70.0 | 70.0 |
| ammonium hydroxide | 3.0 | 3.0 | 3.0 | 3.0 | 3.0 | 3.0 | 3.0 | 3.0 |
| ethylene glycol methyl ether | 15.0 | --- | --- | --- | --- | --- | --- | --- |
| ethylene glycol ethyl ether | --- | 15.0 | --- | --- | --- | --- | --- | --- |
| ethylene glycol n-butyl ether | --- | --- | 15.0 | --- | --- | --- | --- | --- |
| ethylene glycol n-propyl ether | --- | --- | --- | 15.0 | --- | --- | --- | --- |
| propylene glycol methyl ether | --- | --- | --- | --- | 15.0 | --- | --- | --- |
| propylene glycol ethyl ether | --- | --- | --- | --- | --- | 15.0 | --- | --- |
| propylene glycol n-butyl ether | --- | --- | --- | --- | --- | --- | 15.0 | --- |
| propylene glycol n-propyl ether | --- | --- | --- | --- | --- | --- | --- | 15.0 |
| Joncryl 693 | 10.0 | 10.0 | 10.0 | 10.0 | 10.0 | 10.0 | 10.0 | 10.0 |

**Table 7**

| | Carrier No. | | | | | | | |
|---|---|---|---|---|---|---|---|---|
| | 33 | 34 | 35 | 36 | 37 | 38 | 39 | 40 |
| water | 70.0 | 70.0 | 70.0 | 70.0 | 70.0 | 70.0 | 70.0 | 70.0 |
| ammonium hydroxide | 1.5 | 1.5 | 1.5 | 1.5 | 1.5 | 1.5 | 1.5 | 1.5 |
| ethylene glycol methyl ether | 23.5 | --- | --- | --- | --- | --- | --- | --- |
| ethylene glycol ethyl ether | --- | 23.5 | --- | --- | --- | --- | --- | --- |
| ethylene glycol n-butyl ether | --- | --- | 23.5 | --- | --- | --- | --- | --- |
| ethylene glycol n-propyl ether | --- | --- | --- | 23.5 | --- | --- | --- | --- |
| propylene glycol methyl ether | --- | --- | --- | --- | 23.5 | --- | --- | --- |
| propylene glycol ethyl ether | --- | --- | --- | --- | --- | 23.5 | --- | --- |
| propylene glycol n-butyl ether | --- | --- | --- | --- | --- | --- | 23.5 | --- |
| propylene glycol n-propyl ether | --- | --- | --- | --- | --- | --- | --- | 23.5 |
| Joncryl 693 | 5.0 | 5.0 | 5.0 | 5.0 | 5.0 | 5.0 | 5.0 | 5.0 |

**Table 8**

| | Carrier No. | | | | | |
|---|---|---|---|---|---|---|
| | 41 | 42 | 43 | 44 | 45 | 46 |
| water | 70.0 | 70.0 | 70.0 | 70.0 | 70.0 | 70.0 |
| ammonium hydroxide | 3.0 | 3.0 | 3.0 | 3.0 | 3.0 | 1.5 |
| ethylene glycol | 15.0 | --- | --- | --- | --- | -- |
| diethylene glycol | --- | 15.0 | --- | --- | --- | --- |
| triethylene glycol | -- | --- | 15.0 | --- | --- | --- |
| propylene glycol | --- | --- | --- | 15.0 | --- | --- |
| dipropylene glycol | --- | --- | --- | --- | 15.0 | --- |
| tripropylene glycol | --- | --- | --- | --- | -- | 15.0 |
| Joncryl 693 | 10.0 | 10.0 | 10.0 | 10.0 | 10.0 | 10.0 |

**Table 9**

| | Carrier No. | | | | | |
|---|---|---|---|---|---|---|
| | 47 | 48 | 49 | 50 | 51 | 52 |
| water | 70.0 | 70.0 | 70.0 | 70.0 | 70.0 | 70.0 |
| ammonium hydroxide | 1.5 | 1.5 | 1.5 | 1.5 | 1.5 | 1.5 |
| ethylene glycol | 23.5 | --- | --- | --- | --- | --- |
| diethylene glycol | --- | 23.5 | --- | --- | --- | --- |
| triethylene glycol | --- | --- | 23.5 | --- | --- | --- |
| propylene glycol | -- | --- | --- | 23.5 | --- | --- |
| dipropylene glycol | --- | --- | --- | --- | 23.5 | --- |
| tripropylene glycol | --- | --- | --- | --- | --- | 23.5 |
| Joncryl 693 | 10.0 | 5.0 | 5.0 | 5.0 | 5.0 | 5.0 |

### Example 7: Method for delivering ink to substrate.

An ink, as described in any of Examples 1-6, is primed into a piezoelectric DOD ink jet print head. This head uses an expansion or piston mode for the generation of an ink droplet. The generation of each droplet is controlled digitally by the use of electric charging and discharging of the piezoelectric element The systemic control of droplet generation during device and substrate movement allow for the generation of a recognizable pattern or image.

## Claims

1. An inkjet ink comprising:
(a) a carrier comprising:
(i) from about 25 to about 90 percent by weight water;
(ii) from about 1 to about 50 percent by weight cosolvent;
(iii) from about 0 to about 10 percent by weight pH adjuster;
(iv) from about 1 to about 30 percent by weight binder, said binder having a weight average molecular weight of from about 1000 to about 20,000, and wherein said binder is an acrylic resin, a vinyl resin, or a cellulosic resin; and
(b) a colorant.

2. The ink of claim 1 wherein said carrier comprises:
(a) from about 40 to about 90 percent by weight water;
(b) from about 5 to about 40 percent by weight cosolvent;
(c) from about 0 to about 10 percent by weight pH adjuster; and
(d) from about 1 to about 10 percent by weight binder.

3. The ink of claim 1 wherein said carrier comprises:
(a) from about 55 to about 80 percent by weight water;
(b) from about 10 to about 30 percent by weight cosolvent;
(c) from about 0 to about 10 percent by weight pH adjuster; and
(d) from about 1 to about 10 percent by weight binder.

4. The ink of at least one of the preceding claims wherein said cosolvent is one or more compounds selected from the group consisting of glycols, glycol ethers, polyethylene glycols, glycerins, and ketones.

5. The ink of at least one of the preceding claims wherein said pH adjuster is ammonium hydroxide.

6. The ink of at least one of the preceding claims wherein said acrylic resin is styrene acrylic resin or Joncryl resin.

7. The ink of at least one of the preceding claims wherein said vinyl resin is at least one resin selected from the group consisting of polyvinyl acetate resins, polyvinyl alcohol resins, and polyvinylpyrrolidone resins.

8. The ink of at least one of the preceding claims wherein said cellulosic resin is hydroxy methyl cellulose.

9. The ink of at least one of the preceding claims wherein said binder has a weight average molecular weight of from about 1000 to about 10,000.

10. The ink of at least one of the preceding claims wherein said carrier to colorant weight ratio is from about 1:1 to about 50:1.

11. The ink of at least one of the preceding claims wherein said carrier to colorant weight ratio is from about 2:1 to about 25:1.

12. The ink of at least one of the preceding claims wherein said carrier to colorant weight ratio is from about 3:1 to about 10:1.

13. The ink of at least one of the preceding claims wherein said colorant is a dye, pigment, or pigment dispersion.

14. An ink jet ink comprising:
(a) a carrier, said carrier comprising:
(i) from about 55 to about 80 percent by weight water;
(ii) from about 10 to about 30 percent by weight cosolvent;
(iii) from about 0 to about 10 percent by weight pH adjuster; and
(iii) from about 1 to about 10 percent by weight binder, wherein said binder is an acrylic resin having a weight average molecular weight of from about 1000 to about 20,000; and
(b) a colorant, wherein said carrier to colorant weight ratio is from about 3:1 to about 10:1, and wherein said ink has a pH from about 3 to about 12, a surface tension from about 30 to about 50 dynes/cm, and a jetting viscosity from about 4 to about 20 cp.

15. A method of printing a substrate comprising the step of jetting ink onto said substrate, wherein said ink is an ink according to at least one of claims 1 to 14.

16. The method of claim 15 wherein said substrate is porous.

17. The method of claim 15 or 16 wherein said substrate is a fabric or textile.

18. The method of claim 15 or 16 wherein said substrate is paper or paper board.
